# EUROPEAN PATENT APPLICATION

(11) **EP 1 580 989 A1**
(43) Date of publication of application: **28.09.2005**
(21) Application number: 05005749.6
(22) Date of filing: 16.03.2005
(51) Int. Cl.: H04N 5/445

(54) **Method for implementing a digital electronic program guide (EPG)**

(30) Priority: 22.03.2004 KR 2004019399
(71) Applicant: Humax Co., Ltd., Kyonggi-Do 449-080 (KR)
(72) Inventor: Choi, Ahn Sik, Youngdeungpo-gu 150-052, Seoul (JP)
(74) Representative: TER MEER - STEINMEISTER & PARTNER GbR

(57) **Abstract**

A method for implementing an Electronic Program Guide (EPG) A method for implementing a digital Electronic Program guide (EPG) includes the steps of: displaying a date/time selection image including a plurality of cells; and providing a user with an EPG associated with a date and time corresponding to a specific cell if the user designates the specific cell contained in the date/time selection image. The method allows the user to select EPG information corresponding to desired date and time using an additional window, such that the user can directly recognize EPG information associated with a desired date and time zone, and can conveniently search for the EPG information.

## Description

### BACKGROUND OF THE INVENTION

### Field of the Invention

The present invention relates to a digital Electronic Program Guide (EPG), and more particularly to a method for implementing a digital EPG to provide a user with an additional window during an EPG display time, such that the user can select EPG information corresponding to desired date and time using the additional window.

### Description of the Related Art

Typically, a digital broadcast method includes not only a digital satellite broadcast method but also a digital cable broadcast method and a digital terrestrial broadcast method. A digital broadcast receiver such as a Set Top Box (STB) receives a digital broadcast signal in the form of an MPEG transport stream, decodes original video and audio signals, performs signal processing of the decoded resultant signals, and outputs the signal-processed result to a general TV, such that a user can view a desired broadcast program.

The EPG is indicative of a broadcast program schedule displayed on a digital TV monitor, and is transmitted to the TV via a data broadcast method for use in an empty frequency band or a redundant channel. The EPG includes a variety of information, for example, a program channel, a transponder number, a broadcast time, a title, and a category, etc., such that a user can readily recognize not only today's broadcast program information, but also future broadcast program information to be transmitted from individual broadcast stations after the lapse of a predetermined time (e.g., seven days), by manipulating the EPG using a remote-controller.

If a desired broadcast program title is determined, the user can acquire more detailed information than the above-mentioned schedule, can select a desired broadcast program title from among a program guide information image including a variety of broadcast program titles according to service categories, and can also perform a reserved recording function.

As terrestrial and cable digital broadcast methods are widely used throughout the world, the number of viewable channels in the digital broadcast is higher than that of a conventional analog broadcast, and channels are more flexibly used than those of the analog broadcast. Therefore, due to the increasing number of channels and channel allocation variation, the EPG is necessary for the user to properly select a desired broadcast program, and is considered to be important characteristics of digital TVs.

For example, a representative EPG system capable of generating the above-mentioned EPG is a digital satellite broadcast system. The digital satellite broadcast system converts original image data and EPG data into binary data, and converts the binary-formatted EPG data into packet data for data transmission. A reception end of the digital satellite broadcast system stores the EPG data in a memory, and display-associated data is generated from the EPG data stored in the memory, such that the resultant data is displayed on a monitor.

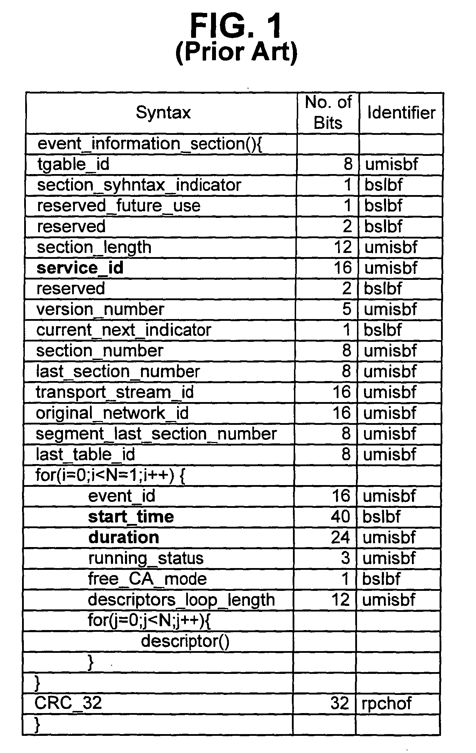

Fig. 1 is a table illustrating standard EPG - associated information for use in terrestrial and cable digital broadcast standards.

Referring to Fig. 1, an Event Information Table (EIT) is provided to individual source IDs (source_id). In other words, the EIT is provided in virtual channel units viewed by a real viewer, instead of physical channel units. The EIT transmits a variety of information (e.g., the number of real broadcast programs contained in 3 hours, and start times, lengths, and titles of individual programs, etc.) to individual virtual channels, such that an EPG capable of providing the viewer with broadcast program guide information can be configured on the condition that a database is formed by collecting EITs associated with all broadcast channels.

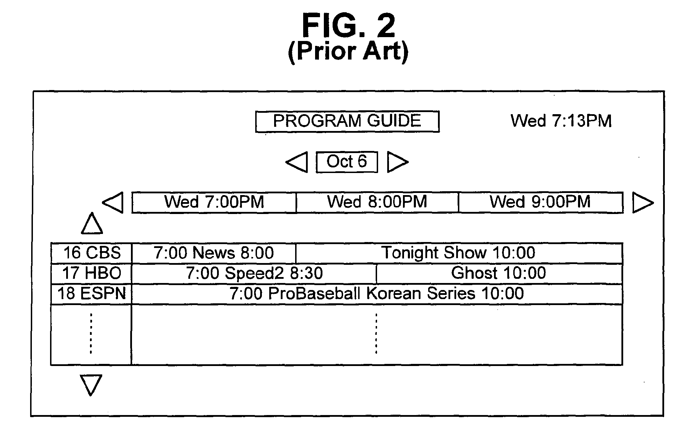

A basic configuration of a conventional EPG screen is displayed as shown in Fig. 2. As can be seen from Fig. 2, in order to allow a user to recognize when a desired program is broadcast in the conventional EPG, the user must search for date and time information from among EPG data displayed on a monitor.

The conventional EPG screen image has a limited screen size, such that information of three to four hours is displayed on a single screen image.

Therefore, in order to view future EPG information of the next date or time, the user must change current information to another information associated with the next date or time using an additional key. For example, in order to view specific channel EPG information after seven days, the user must repeatedly press a date conversion key several times. Also, in order to view information associated with another time zone of the next date, the user must directly move a scroll bar along a time axis, resulting in greater inconvenience of use.

### SUMMARY OF THE INVENTION

Therefore, the present invention has been made in view of the above problems, and it is an object of the present invention to provide a method for allowing a user to directly recognize EPG information associated with a desired date and time zone.

In accordance with the present invention, the above and other objects can be accomplished by a method for implementing a digital Electronic Program guide (EPG) comprising the steps of: displaying a date/time selection image including a plurality of cells; and providing a user with an EPG associated with a date and time corresponding to a specific cell if the user designates the specific cell contained in the date/time selection image.

Preferably, the plurality of cells are arranged in a plane formed by a date axis and a time axis, the date axis includes as many days as provided via Event Information Tables (EITs), and the time axis is formed by dividing one day (i.e., 24 hours) into a predetermined number of time intervals.

Preferably, the date/time selection image is displayed on a single image including the EPG, or is displayed on another image separated from the image including the EPG.

Preferably, a selection item for activating the date/time selection image is assigned in some images, or a button for activating the date/time selection image is assigned to a remote-controller.

Preferably, the cell is selected by a direction button operation, and date, time, and/or day information corresponding to a selected cell are displayed at a lower part of the date/time selection image whenever a cell selection operation is performed.

The present invention provides an additional window using which a user can select a date and a specific time before a general EPG image is displayed, such that the user can select EPG information associated with desired date and time information.

In this case, the user can select desired date and time information using arrow keys (also called direction keys) in the additional window, i.e., the date/time selection image.

Generally, EPG information corresponding to three hours is transmitted via a single EIT, and EPG information corresponding to totally eight days is transmitted, such that 64 cells, denoted by "8 (24 hours / 3) x 8", are displayed on the date/time selection image. The user moves a current position of a cursor to another position using arrow keys, such that the user can quickly select desired date and time information, and general EPG information is displayed on the basis of the selected date and time information.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a table illustrating standard EPG - associated information for use in current terrestrial and cable digital broadcast standards;
Fig. 2 is a basic configuration of a conventional EPG screen image;
Fig. 3 is an exemplary display image for allowing a user to select desired date and time information in accordance with the present invention;
Fig. 4 is an exemplary display image of EPG information displayed when a specific cell is selected in Fig. 3;
Fig. 5 is an exemplary display image in which a date and time selection image and an EPG information image are integrated in accordance with a preferred embodiment of the present invention;
Fig. 6 is a block diagram illustrating a digital broadcast receiver to which a digital EPG implementation method can be readily applied in accordance with a preferred embodiment of the present invention; and
Fig. 7 is a flow chart illustrating a digital EPG implementation method in accordance with the present invention.

### DETAILED DESCRIPTION OF PREFFERRED EMBODIMENTS

Now, preferred embodiments of the present invention will be described in detail with reference to the annexed drawings.

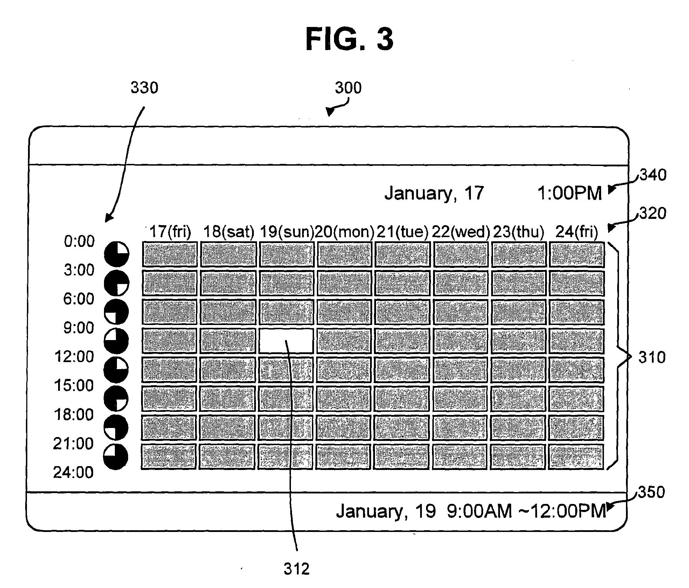

Fig. 3 is an exemplary display image for allowing a user to select desired date and time information in accordance with the present invention.

Referring to Fig. 3, if a user activates an EPG, a date and time selection image 300 is first displayed before displaying a conventional EPG image.

Due to the problem of the above-mentioned conventional EPG image, i.e., a spatial limitation of the conventional EPG image, only information corresponding to three to four hours is displayed on a single EPG image, such that a user must use an additional key to view EPG information associated with the next date or time, resulting in greater inconvenience of use. In order to solve the above-mentioned problem of the conventional EPG image, the present invention implements the date and time selection image 300 shown in Fig. 3.

The date and time selection image 300 includes a date axis 320, a time axis 330, and a plurality of cells contained in a plane formed by the date axis 320 and the time axis 330. The date and time selection image is characterized in that the date axis 320 on which as many days as provided via EITs are indicated and the time axis 330 on which one day (i.e., 24 hours) is divided into predetermined units and the divided units are displayed are formed as one image.

For example, the date and time selection image 300 includes 64 cells 310 as shown in Fig. 3, and is designed to be activated by a user command.

Current date and time information 340 is displayed at an upper part of the date and time selection image 300. Time information is divided into a plurality of subtime data in 3-hour units, and the divided subtime data in 3-hour units are sequentially arranged at the leftmost column of the above-mentioned 64 cells 310. A plurality of dates from the current date to 8 days in the further are sequentially arranged at the uppermost row of the above-mentioned 64 cells.

In other words, the above-mentioned 64 cells 310 are configured by combination of individual points contained in the time axis 330 and the date axis 320. A user can select a specific cell corresponding to a desired date contained in the date axis 320 and a desired time contained in the time axis 330 from among a plurality of cells, and can acquire EPG information corresponding to the desired date and time.

For example, in order to recognize EPG information originated from a specific time (e.g., 9:00 AM on January 19), the user must select a specific cell 312 as shown in Fig. 3. The specific cell 312 is indicative of a single cell, which is positioned at a fourth cell contained in a column composed of a plurality of third cells originated from the left end of the date axis 320.

If the cell 312 is selected, date and time information 350 of the selected cell is displayed at the lower part of the above-mentioned date and time selection image 300.

The reason why an entire image is composed of 64 cells is that EPG information corresponding to three hours is transmitted via a single EIT, and EPG information corresponding to totally eight days are transmitted.

64 cells, denoted by "8 (24 hours / 3) x 8", are displayed on the date and time selection image 300 shown in Fig. 3 such that time information generated during 8 days is displayed in 3-hour units.

However, the above-mentioned example is indicative of only one embodiment of the present invention, and the above-mentioned cell configuration of the date and time selection image is not limited to the above-mentioned example and is also applicable to a variety of modifications.

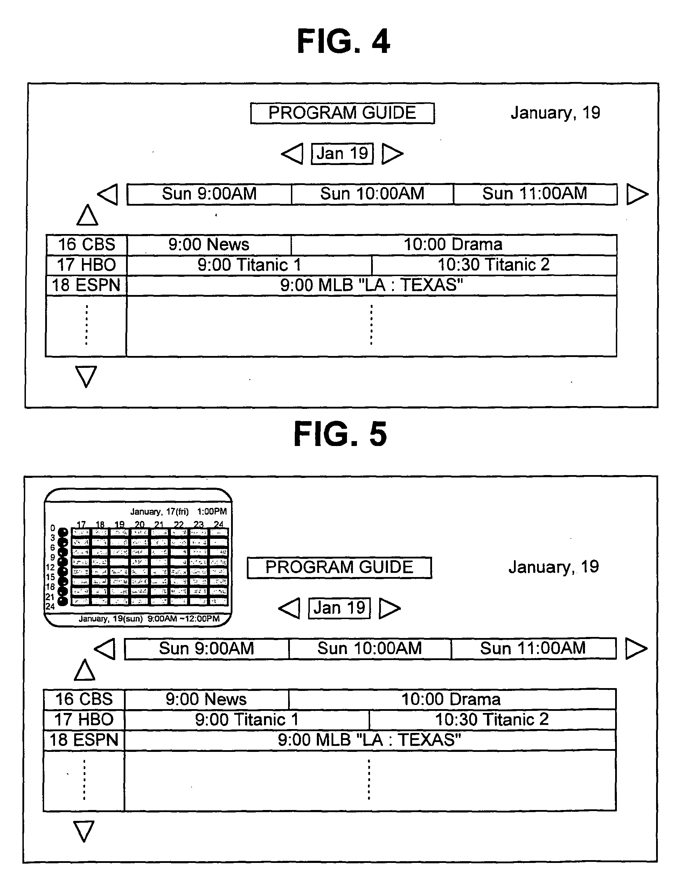

If a specific cell is selected using the above-mentioned date and time selection image, EPG information corresponding to the selected cell can be acquired, and its detailed description will hereinafter be described with reference to Fig. 4.

Fig. 4 is an exemplary display image of EPG information displayed when a specific cell is selected and activated in Fig. 3.

As can be seen from Fig. 4, if a user selects a desired cell, it can be recognized that EPG information originated from a specific date and time designated by the selected cell is displayed.

In this manner, the present invention allows the user to select EPG information associated with a desired date and time using a date and time selection image, instead of immediately activating and displaying the EPG information, such that the user can conveniently search for desired EPG information.

The present invention discloses a preferred embodiment in which the date and time selection image and the EPG information display image are separated from each other so that they are configured in the form of different windows. In other words, although the date and time selection image is implemented with different OSD images in the present invention, it should be noted that the date and time selection image and the EPG information display image may be integrated in only one image.

In more detail, the above-mentioned date and time selection image may be designed to occupy a predetermined part contained in an upper part of the EPG information display image. If a specific cell contained in the date and time selection image is selected, the EPG information display image may be designed to display EPG information originated from a specific date and time designated by the specific cell.

In this case, the present invention allows a user to select EPG information associated with a desired date and time using the date and time selection image in the same manner as in the above-mentioned case, such that the user can conveniently search for desired EPG information.

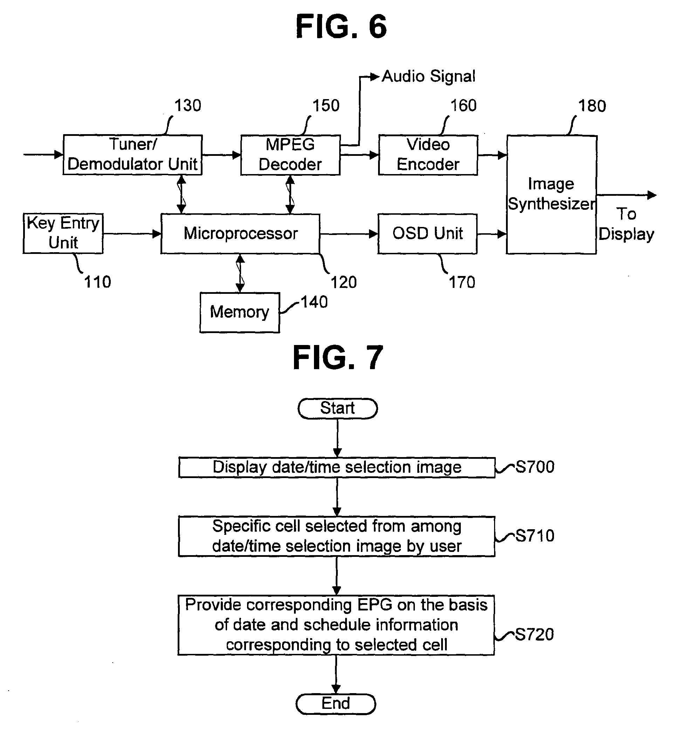

Fig. 6 is a block diagram illustrating a digital broadcast receiver to which a digital EPG implementation method can be readily applied in accordance with a preferred embodiment of the present invention. It should be noted that the digital broadcast receiver shown in Fig. 6 is indicative of only one preferred embodiment of the present invention.

The digital broadcast receiver includes a key entry unit 110, a microprocessor 120, a tuner/demodulator unit 130, a memory 140, an MPEG decoder 150, a video encoder 160, an OSD unit 170, and an image synthesizer 180.

The key entry unit 110 is comprised of a remote-controller or a key matrix mounted to its own panel, generates a key signal corresponding to a user command, and transmits the key signal to the microprocessor 120. The microprocessor 120 receives the key signal from the key entry unit 110, and generates a variety of control signals capable of performing a specific function corresponding to the received key signal. For example, the microprocessor 120 includes a processor capable of controlling overall operations of a satellite broadcast receiver, and generates a tuning control signal corresponding to a broadcast channel selection signal received from the key entry unit 110, and transmits the tuning control signal to the tuner/demodulator unit 130.

The microprocessor 120 allows a user to select a specific cell associated with the date and time selection image using the key entry unit 110 on the condition that the date and time selection image is displayed. If a specific button is pressed on the condition that a cursor is positioned on the specific cell, the microprocessor 120 reads various menu image information stored in the memory 140, activates EPG information originated from a date and time field corresponding to the selected cell, and displays the activated EPG information on a screen.

Fig. 7 is a flow chart illustrating a digital EPG implementation method in accordance with the present invention.

Referring to Fig. 7, a date and time selection image 300 of Fig. 3 is displayed at step S700.

In order to activate the date and time selection image, a selection item may be assigned in some images, or a button may also be assigned to a remote-controller.

If a user enters the button or selects the selection items capable of activating the above-mentioned date and time selection image, the date and time selection image can be displayed on a screen.

Although the above-mentioned example configures the date and time selection image and the EPG information display image in the form of different windows, it should be noted that the date and time selection image may be designed to occupy a predetermined part of an upper part of the EPG information display image as previously described in Fig. 5.

If the date and time selection image is activated and displayed, the user selects a specific cell corresponding to date and time information of desired EPG information to be searched for at step S710.

If the user selects a specific cell in the date and time selection image, an EPG information image corresponding to the selected cell is displayed at step S720.

That is, if the user selects a desired cell contained in the date and time selection image, EPG information originated from a specific date and time designated by the selected cell is displayed as shown in Fig. 4.

As apparent from the above description, the present invention allows a user to directly recognize EPG information associated with a desired date and time zone, such that the user can conveniently search for the EPG information.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for implementing a digital Electronic Program guide (EPG) comprising the steps of:
displaying a date/time selection image including a plurality of cells; and
providing a user with an EPG associated with a date and time corresponding to a specific cell if the user designates the specific cell contained in the date/time selection image.

2. The method according to claim 1, wherein the plurality of cells are arranged in a plane formed by a date axis and a time axis.

3. The method according to claim 2, wherein the date axis includes as many days as provided via Event Information Tables, and the time axis is formed by dividing 24 hours into a predetermined number of time intervals.

4. The method according to claim 3, wherein the time axis of the 24 hours is divided into a plurality of time zones, each of which is 3 hours.

5. The method according to claim 1, wherein a selection item for activating the date/time selection image is assigned in some images.

6. The method according to claim 1, wherein a button for activating the date/time selection image is assigned to a remote-controller.

7. The method according to claim 1, wherein the date/time selection image is displayed on a single image including the EPG.

8. The method according to claim 1, wherein the date/time selection image is displayed on another image separated from the image including the EPG.

9. The method according to claim 1, wherein the cell is selected by a direction button operation.

10. The method according to claim 9, wherein date, time, and/or day information corresponding to a selected cell are displayed at a lower part of the date/time selection image whenever a cell selection operation is performed.
